Europäisches Patentamt

European Patent Office

Office européen des brevets

(19)

(11) Numéro de publication : **0 406 081 B1**

## (12) FASCICULE DE BREVET EUROPEEN

(45) Date de publication du fascicule du brevet :
**03.06.92 Bulletin 92/23**

(51) Int. Cl.$^5$ : **G01N 3/10**

(21) Numéro de dépôt : **90401790.2**

(22) Date de dépôt : **22.06.90**

---

(54) **Dispositif perfectionné pour effectuer des essais sous contraintes sur des échantillons de roche et autres matériaux.**

---

(30) Priorité : **28.06.89 FR 8908759**

(43) Date de publication de la demande :
**02.01.91 Bulletin 91/01**

(45) Mention de la délivrance du brevet :
**03.06.92 Bulletin 92/23**

(84) Etats contractants désignés :
**DE GB IT NL**

(56) Documents cités :
**GB-A- 2 194 336
COMPTES RENDUS. SERIE C. SCIENCES
CHIMQUES, vol. 299, no. 8, septembre 1984,
pages 375-378, Académie des Sciences, Paris,
FR;P.N. MICHELIS et al.: "Mécanique des
milieux continus"**

(73) Titulaire : **INSTITUT FRANCAIS DU PETROLE
4, Avenue de Bois Préau
F-92502 Rueil-Malmaison (FR)**

(72) Inventeur : **Sarda, Jean-Paul
13 bis, rue Daniel Casanova
F-92500 Rueil-Malmaison (FR)**
Inventeur : **Grard, Guy
82, rue Pasteur
F-95100 Argenteuil (FR)**
Inventeur : **Deflandre, Jean-Pierre
22, rue de Buffet
F-95100 Argenteuil (FR)**
Inventeur : **Perreau, Philippe
24 Boulevard du Couchant
F-92000 Nanterre (FR)**

EP 0 406 081 B1

Jouve, 18, rue Saint-Denis, 75001 PARIS

## Description

La présente invention concerne un dispositif perfectionné pour effectuer des essais sous contrainte sur des matériaux prélevés dans une formation géologique reconstitués.

Par la demande de brevet français publiée FR 2 633 718 on connait un dispositif d'essais adaptée pour exercer des contraintes sur des échantillons géologiques de forme cylindrique. Il comporte un corps central pourvu d'une cavité axiale ouverte à une extrémité et fermée à l'autre. Dans cette cavité est disposée une chambre tubulaire en matériau déformable communiquant avec des moyens pour produire un fluide sous pression. Au centre de la chambre déformable, est placé un échantillon de forme cylindrique. Le corps est refermé par des éléments formant couvercle pourvus d'un alésage central pour un piston susceptible de venir en appui contre une extrémité de l'échantillon. Des jauges de contrainte sont collées à l'échantillon et reliées à l'extérieur par des conducteurs traversant le couvercle. La chambre déformable est pourvue de passages radiaux étanches pour plusieurs palpeurs adaptés à la mesure des déplacements latéraux de l'échantillon. On injecte du fluide pour dilater la chambre déformable et appliquer sur l'échantillon des contraintes radiales. Dans le même temps, on applique sur le piston une force axiale importante au moyen d'un vérin par exemple, et l'on enregistre les déformations et déplacements subis par l'échantillon.

Ce dispositif convient pour l'étude d'échantillons de forme sensiblement cylindrique subissant des contraintes à la fois radiales et axiales et les données qu'il produit sont celles mesurées par des capteurs placés au contact même de l'échantillon testé. Le dispositif perfectionné selon l'invention a été mis au point pour faciliter et accélérer la mise en place d'échantillons devant être soumis à des contraintes suivant plusieurs directions, et aussi pour analyser plus finement le comportement des échantillons au cours des tests.

Le dispositif selon l'invention comporte un corps rigide allongé délimitant suivant son axe une cavité ouverte à une première extrémité et fermée à son extrémité opposée, adaptée à recevoir un échantillon, des moyens pour exercer des contraintes latérales sur l'échantillon, des éléments formant couvercle pour clore l'extrémité ouverte de la cavité, ces éléments étant pourvus d'un alésage central pour un piston susceptible de venir en appui contre l'échantillon suivant l'axe du corps, des moyens pour exercer des contraintes sur le piston et des moyens de mesure au contact de l'échantillon pour déterminer les contraintes et déplacements subis par l'échantillon en plusieurs emplacements.

Il est caractérisé en ce qu'il comporte une sonde de mesure acoustique disposée à l'intérieur du corps permettant d'obtenir une représentation de la structure interne de l'échantillon et son évolution durant les essais.

Le piston comporte par exemple un logement ou est disposée une partie au moins de la sonde acoustique, et des moyens d'application de ladite partie de la sonde contre le fond du logement.

Suivant un mode de réalisation, le corps comporte une seconde cavité du côté de l'échantillon opposé au piston, une seconde partie de la sonde acoustique étant disposée dans la seconde cavité. Celle-ci est fermée par une plaque sur laquelle repose l'échantillon, et des moyens sont logés dans cette seconde cavité pour appliquer ladite seconde partie de la sonde contre la plaque.

Suivant un mode préféré de réalisation, les moyens pour exercer des contraintes latérales comportent au moins deux vérins amovibles et le corps comporte un logement latéral pour chacun desdits vérins amovibles ainsi que des canaux faisant communiquer chaque logement latéral avec une source de fluide sous pression.

Chaque vérin amovible comporte par exemple un cylindre maintenu en place par la fermeture des éléments formant couvercle pour ledit corps, et pourvu d'un prolongement radial adapté à venir s'engager dans un desdits canaux, un piston prolongé d'une tige traversant le fond du cylindre , cette tige comportant un passage axial pour un doigt mobile, les moyens de mesure au contact de l'échantillon comportant au moins un palpeur disposé dans le prolongement de chaque doigt mobile et en contact avec celui-ci.

La sonde acoustique peut comporter aussi des moyens d'émission et de réception acoustique suivant au moins un des axes de contrainte, ces moyens étant disposés d'un même côté par rapport à l'échantillon.

La sonde acoustique est conçue pour émettre des ondes acoustiques de compression et/ou de cisaillement.

L'utilisation d'une sonde acoustique permet une étude plus fine du comportement de l'échantillon testé. Le positionnement de cette sonde par rapport à l'échantillon est facilité du fait qu'elle est placée dans des cavités au contact de parois directement au contact de ce même échantillon.

L'utilisation aussi de vérins latéraux amovibles pouvant être mis en place dans le corps après l'installation de l'échantillon à tester, contribue à accélérer les opérations préparatoires avant les essais sous contraintes.

Les contraintes tri-axiales appliquées permettent de reconstituer en laboratoire celles qui sont appliquées en profondeur dans les terrains étudiés.

D'autres caractéristiques et avantages de la méthode et du dispositif selon l'invention apparaitront mieux à la lecture de la description ci-après de deux modes de réalisation en se référant aux dessins annexés où:

– la Fig.1 montre schématiquement une vue de face en coupe du dispositif ou les moyens de contrainte latéraux sont des vérins hydrauliques;
– la Fig.2 montre une vue de dessus du dispositif de la Fig.1; et
– la Fig.3 montre la forme d'une pièce de centrage entourant l'échantillon à tester; et
– la fig.4 montre schématiquement une vue de dessus du dispositif dans un mode de réalisation ou les moyens de contrainte latéraux sont du type à enceinte déformable.

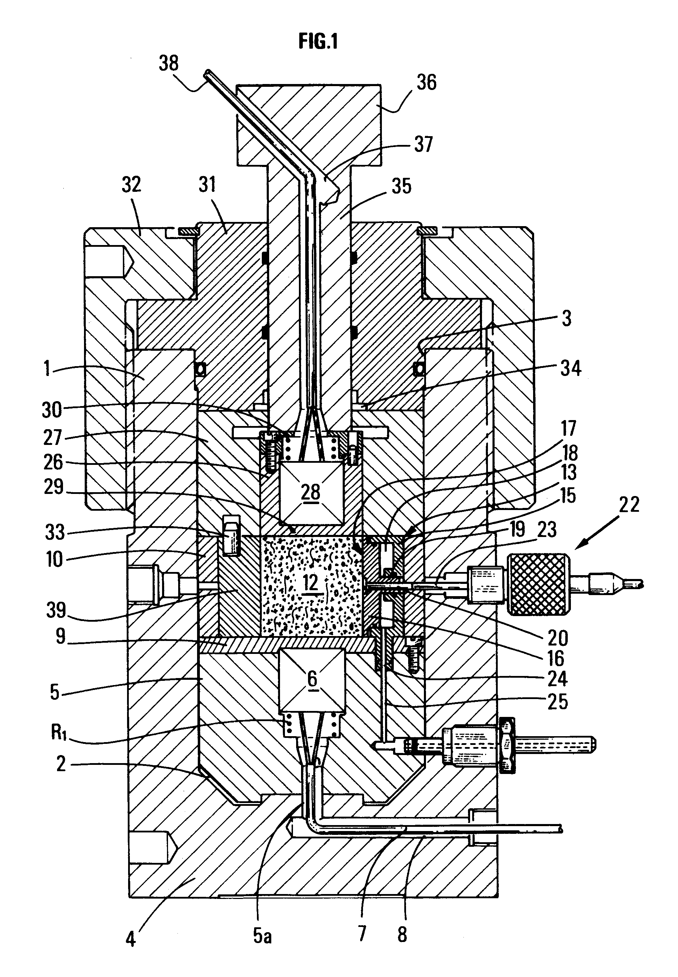

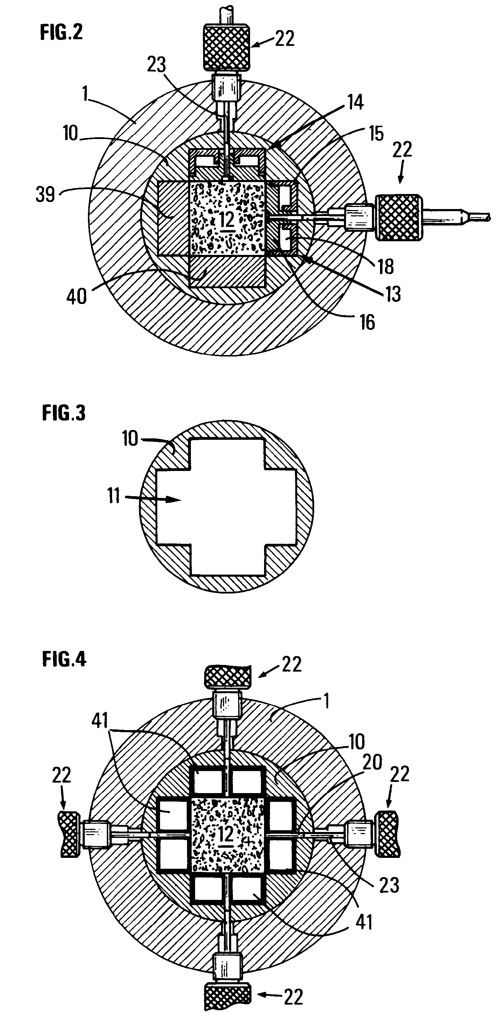

Suivant le mode de réalisation de la Fig.1, le dispositif comporte un corps 1 pourvu d'une cavité centrale sensiblement cylindrique 2 ouverte à une première extrémité 3 et fermée à son extrémité opposée par une paroi 4 constituant le fond de la cavité. Une embase 5 pourvue d'un canal axial 5A, est disposée au fond de la cavité. Elle est pourvue d'un logement axial pour un transducteur récepteur d'ondes acoustiques 6. Des conducteurs électriques 7 associés à ce transducteur sortent du corps par un canal 8. Ils sont connectés à un ensemble d'acquisition non représenté. Une semelle 9 est fixée au-dessus de l'embase et ferme le logement du transducteur 6. Des ressorts R sont disposés dans le logement de manière à plaquer le transducteur 6 contre la semelle 9. Au-dessus de celle-ci est disposée une pièce métallique de centrage 10 (Fig.3) pourvue d'un évidement central 11 en forme de croix. Au centre de l'évidement 11, est disposé un échantillon cubique 12. Dans deux des quatre parties de l'évidement autour de l'échantillon 12 à tester, sont disposés des moyens pour exercer des contraintes latérales. Dans le mode de réalisation de la Fig.1, ces moyens comportent deux vérins hydrauliques amovibles 13, 14 (Fig.2). Chacun d'eux comporte un cylindre 15 et un piston 16 pourvu d'une face d'application 17 contre l'échantillon et d'une partie plus étroite adaptée à coulisser de façon étanche dans une cavité 18 du cylindre 15. Du côté opposé à l''échantillon 12, la cavité 18 du cylindre 15 est délimitée par une paroi 19 traversée par un alésage central pour guider la tige 20 du piston 16. Celui-ci est lui-même traversé de part en part et suivant son axe par un doigt axial 21 dont une extrémité vient en appui contre la face de l'échantillon. A l'extérieur du corps, derrière chaque vérin, est disposé un capteur de déplacement 22 d'un type connu. Il est pourvu d'un palpeur 23 traversant la paroi latérale de la pièce de centrage 10 et que l'on pousse au contact de la tige 21. Celle-ci lui transmet les déplacements de l'échantillon 12 suivant l'axe du vérin 13, 14.

Chaque cylindre de vérin comporte une extension radiale 24 qui, à la mise en place du vérin, vient s'enfoncer dans un logement du corps ménagé pour le recevoir. Par cette extension 24, la cavité intérieure du vérin se trouve en communication avec un canal 25 relié à un système hydraulique non représenté délivrant sur commande un fluide sous pression.

Au-dessus de l'échantillon et à son contact, est disposé un boîtier 26 déplaçable suivant l'axe du corps, qui est guidé dans son déplacement par une pièce de centrage 27 emboîtée dans la cavité 2. Le boîtier 26 contient un transducteur 28 émetteur d'ondes acoustiques de type P et/ou S. La face d'application 29 du boitier 26 contre l'échantillon est carrée. Des éléments ressorts 30 sont disposés dans le boîtier 26 pour presser le transducteur émetteur 28 contre la face d'application.

Des éléments 31, 32 formant couvercle, permettent de refermer le corps après la mise en place. Leur mise en place est facilitée par un ergot de détrompage 33. Une ouverture centrale 34 est pratiquée dans l'axe de l'élément 31 pour un piston 35 pourvu d'une tête 36. Par un passage 37 dans le piston, on fait passer un câble 38 pour relier le transducteur 28 à un émetteur d'ondes acoustiques non représenté adapté à émettre des signaux à une fréquence de plusieurs centaines de kiloHertz. L'application à l'échantillon de contraintes suivant l'axe du corps s'effectue en plaçant la tête du piston 35 sous une presse ou un vérin.

Les deux espaces libres de la pièce 10 opposés à ceux occupés par les vérins 13, 14, sont occupés dans ce cas avec des pièces d'appui 39, 40.

Suivant la variante de réalisation de la Fig.3, les vérins hydrauliques à piston rigide sont remplacés par des enceintes 41 dont au moins la face en contact avec l'échantillon est déformable. On donne à chaque enceinte une forme annulaire de manière à laisser le passage suivant son axe, à un doigt axial 21 servant d'appui au palpeur 23 de l'instrument associé 22 de mesure de déplacement de l'échantillon.

Les deux modes de réalisation décrits comportent un seul vérin par direction d'application de contrainte. Il est bien évident que l'on peut utiliser une disposition symétrique, Les pièces d'appui 39, 40 étant remplacées par deux vérins identiques aux vérins 13, 14. Le corps 1 est de préférence pourvu de quatre logements pour les extensions radiales 24 et de canaux d'amenée de fluide sous pression tels que 25 pour permettre indifféremment la mise en place de deux ou quatre vérins latéraux.

On voit que l'agencement du dispositif permet une mise en place progressive des éléments constitutifs autour de l'échantillon. Le corps étant ouvert, on installe le transducteur 6 dans son logement avec par dessus la semelle 9. L'échantillon 12 est déposé au centre de la semelle 9 et les deux ou quatre vérins latéraux sont enfoncés le long de ses faces latérales avec leurs prolongements radiaux engagés dans les canaux d'amenée de fluide sous pression 25. Les palpeurs 23 sont amenées au contact des doigts axiaux 21 eux-mêmes au contact des faces latérales de l'échantillon 12. Le boitier 26 contenant le transducteur 28 est ensuite déposé sur l'échantillon et le corps est refermé par adjonction des éléments formant couvercle et engagement du piston 35 par l'ouverture axiale 34. Le dispositif est prêt pour commencer les tests sous contraintes.

Le dispositif décrit comporte une sonde acoustique avec les transducteurs émetteur et récepteur séparés l'un de l'autre. On ne sortirait pas du cadre de l'invention bien sûr en utilisant une sonde acoustique fonctionnant avec des moyens émetteurs et récepteurs d'ondes acoustiques contenus dans un boitier unique disposé d'un même côté de l'échantillon 12, la sonde fonctionnant par détection des ondes réfléchies. On pourra dans ce cas remplacer au moins une des deux pièces d'appui 39, 40 par une sonde de ce type de manière à obtenir une représentation multi-dimensionnelle de l'échantillon.

## Revendications

1. Dispositif d'essai pour l'étude d'échantillons de roche ou d'autres matériaux soumis à des contraintes, comportant un corps rigide allongé (1) délimitant suivant son axe une cavité (2) ouverte à une première extrémité et fermée à son extrémité opposée, adaptée à recevoir un échantillon (12), des moyens (13,14,15,16) pour exercer des contraintes latérales sur l'échantillon (12), des éléments (31, 32) formant couvercle pour clore l'extrémité ouverte de la cavité (2), ces éléments (31,32) étant pourvus d'un alésage central (34) pour un piston (35) susceptible de venir en appui contre l'échantillon (12) suivant l'axe du corps (1), des moyens pour exercer des contraintes sur le piston (35) et des moyens de mesure (22,23) au contact de l'échantillon (12) pour déterminer les contraintes et déplacements subis par l'échantillon (12) en plusieurs emplacements, caractérisé en ce qu'il comporte au moins une sonde de mesure acoustique (6, 28) disposée à l'intérieur du corps (1) permettant d'obtenir une représentation de la structure interne de l'échantillon (12) et son évolution durant les essais.

2. Dispositif selon la revendication 1, caractérisé en ce qu'il comporte un boîtier (26) pour au moins une partie (28) de la sonde acoustique, ce boîtier (26) étant interposé entre l'échantillon (12) et le piston (35), et des moyens (30) d'application de ladite partie de la sonde (6,28) contre le fond du boîtier (26).

3. Dispositif selon la revendication 2, caractérisé en ce que le corps (1) comporte une seconde cavité du côté de l'échantillon (12) opposé au piston (35), une seconde partie (6) de la sonde acoustique étant disposée dans cette seconde cavité.

4. Dispositif selon la revendication 3, caractérisé en ce que la seconde cavité du corps (1) est fermée par une semelle (9) sur laquelle repose l'échantillon (12), des moyens (R1) étant logés dans cette seconde cavité pour appliquer ladite seconde partie (6) de la sonde contre la semelle (9).

5. Dispositif selon l'une quelconque des revendications précédentes, caractérisé en ce que les moyens pour exercer des contraintes latérales comportent au moins deux vérins amovibles (13, 14) dont les axes sont perpendiculaires à l'axe du corps (1) pour exercer des contraintes suivant deux faces latérales de l'échantillon (12), et le corps (1) comporte un logement latéral pour chacun desdits vérins amovibles (13,14) et des canaux (25) faisant communiquer chaque logement latéral avec une source de fluide sous pression.

6. Dispositif selon la revendication 5, caractérisé en ce que chaque vérin amovible (13,14) comporte un cylindre (15) maintenu en place par la fermeture des éléments formant couvercle pour ledit corps (1), et pourvu d'un prolongement radial (24) adapté à venir s'engager dans un desdits canaux (25), un piston (16) prolongé d'une tige (20) traversant le fond du cylindre (15), cette tige (20) comportant un passage axial pour un doigt mobile (21), les moyens de mesure au contact de l'échantillon (12) comportant au moins un palpeur (23) disposé dans le prolongement de chaque doigt mobile (21) et en contact avec celui-ci.

7. Dispositif selon l'une quelconque des revendications précédentes, caractérisé en ce qu'il comporte des moyens d'émission-réception acoustiques adaptés pour effectuer des mesures suivant au moins deux directions différentes.

## Patentansprüche

1. Prüfvorrichtung zur Untersuchung von Beanspruchungen ausgesetzten Gesteins- oder anderen Materialproben, mit einem steifen länglichen Körper (1), der längs seiner Achse einen Hohlraum (2) begrenzt, der an einem ersten Ende offen und an seinem gegenüberliegenden Ende geschlossen und so ausgelegt ist, daß er eine Probe (12) aufnimmt, Mitteln (13, 14, 15, 16), um seitliche Beanspruchungen auf die Probe (12) auszuüben, mit einen Deckel bildenden Elementen (31, 32), um das offene Ende des Hohlraums (2) zu schließen, wobei diese Elemente (31, 32) mit einer mittigen Bohrung (34) für einen Kolben (35) versehen sind, der so eingerichtet ist, daß er in Anlage gegen die Probe (12) längs der Achse des Körpers (1) kommt, Mitteln, um Beanspruchungen auf den Kolben (35) auszuüben und Meßmitteln (22, 23) in Kontakt mit der Probe (12), um die Beanspruchungen und Bewegungen oder Verschiebungen zu bestimmen, die von der Probe (12) an mehreren Orten erfahren wurden, dadurch gekennzeichnet, daß sie wenigstens eine akustische Meßsonde (6, 28) umfaßt, die im Inneren des Körpers (1) angeordnet ist und eine Wiedergabe der Innenstruktur der Probe (12) und deren Entwicklung während der Versuche zu erhalten gestattet.

2. Vorrichtung nach Anspruch 1, dadurch gekennzeichnet, daß sie ein Gehäuse (26) für wenigstens einen Teil (28) der akustischen Sonde umfaßt, wobei dieses Gehäuse (26) zwischen die Probe (12) und den Kolben (35) geschaltet ist und Mitteln (30) zur Anlage dieses Teils der Sonde (28) gegen den Boden des Gehäuses (26).

3. Vorrichtung nach Anspruch 2, dadurch gekennzeichnet, daß dieser Körper (1) einen zweiten Hohlraum auf der dem Kolben (35) gegenüberliegenden Seite der Probe (12) umfaßt, wobei ein zweiter Teil (6) der akustischen Sonde in diesem zweiten Hohlraum angeordnet ist.

4. Vorrichtung nach Anspruch 3, dadurch gekennzeichnet, daß der zweite Hohlraum des Körpers (1) durch eine Grundplatte (9) geschlossen ist, auf der die Probe (12) ruht, wobei Mittel (R1) in diesem zweiten Hohlraum gelagert sind, um diesen zweiten Teil (6) der Sonde gegen die Grundplatte (9) zu drücken.

5. Vorrichtung nach einem der vorhergehenden Ansprüche, dadurch gekennzeichnet, daß die Mittel zum Aufbringen seitlicher Beanspruchungen wenigstens zwei lösbare oder ausfahrbare Stempelausbildungen (13, 14) umfaßen, deren Achsen senkrecht zur Achse des Körpers (1) sind, um Beanspruchungen entsprechend zwei seitlichen Flächen der Probe (12) auszuüben und daß der Körper (1) ein seitliches Lager für jede dieser lösbaren oder ausfahrbaren Stempelausbildungen (13, 14) umfaßt und Kanäle (25) jedes seitliche Lager (13, 14) mit einer Druckfluidquelle in Verbindung treten lassen.

6. Vorrichtung nach Anspruch 5, dadurch gekennzeichnet, daß jede lösbare oder ausfahrbare Stempelausbildung (13, 14) einen Zylinder (15) umfaßt, der an seinem Ort zum Schließen der einen Deckel für den Körper (1) bildenden Elemente gehalten ist und mit einer radialen Verlängerung (24) versehen ist, die so ausgelegt ist, daß sie in einen dieser Kanäle (25) greift, wobei ein um eine Stange (20) verlängerter Kolben (16) den Boden des Zylinders (15) durchsetzt, wobei diese Stange (20) einen Axialdurchlaß für einen beweglichen Finger (21) umfaßt und Meßmittel in Kontakt mit der Probe (12) vorgesehen sind, die wenigstens einen Taster (23) umfassen, der in der Verlängerung jedes beweglichen Fingers (21) und in Kontakt mit diesem angeordnet ist,

7. Vorrichtung nach einem der vorhergehenden Ansprüche, dadurch gekennzeichnet, daß sie akustische Sende-Empfangsmittel umfaßt, die ausgelegt sind, um Messungen entsprechend wenigstens zweier unterschiedlicher Richtungen vorzunehmen.

**Claims**

1. Testing device for examining samples of rock or other materials subjected to stress, comprising an extended rigid body (1) delineating along its axis a cavity (2) open at its first end and closed at its opposite end and adapted for holding a sample (12), means (13, 14, 15, 16) for applying lateral stress to the sample (12), elements (31, 32) forming a lid to close the open end of the cavity (2) wherein these elements (31, 32) have a central bore (34) for a piston (35) that will be brought into contact with the sample (12) in line with the axis of the body (1), means for applying stress to the piston (35) and measuring means (22, 23) in contact with the sample (12) to detect stress and displacements undergone by the sample in several places, characterised in that it comprises at least one acoustic measuring sonde (6, 28) located inside the body (1) permitting a representation of the inner structure of the sample (12) and its development during the tests to be obtained.

2. Device in accordance with claim 1, characterised in that it comprises a box (26) for at least one section (28) of the acoustic sonde, this box (26) being positioned between the sample (12) and the piston (35) and means (30) for applying this section of the sonde (6, 28) against the bottom of the box (26).

3. Device in accordance with claim 2, characterised in that the body (1) comprises a second cavity at the side of the sample (12) opposite the piston (35), a second section (6) of the acoustic sonde being located in this second cavity.

4. Device in accordance with claim 3, characterised in that the second cavity of the body (1) is closed by a flange (9) on which the sample (12) sits, means (R1) being housed in this second cavity for applying the second section (6) of the sonde against the flange (9).

5. Device in accordance with any one of the preceding claims, characterised in that the means for applying lateral stress consist of at least two removable jacks (13, 14), whose axes are perpendicular to the axis of the body (1) for applying stress along two lateral surfaces of the sample (12) and the body (1) has a lateral housing for each of the removable jacks (13, 14) and channels (25) providing communication for each lateral housing (13, 14) with a source of pressurised fluid.

6. Device in accordance with claim 5, characterised in that each removable jack (13, 14) comprises a cylinder (15) held in place by the closing of the elements forming the lid of the body (1) and fitted with a radial extension (24) adapted so as to move into one of the channels (25) a piston (16) extended by a rod (20) crossing the bottom of the cylinder, the rod (20) having an axial passageway for a mobile finger (21), the measuring means in contact with the sample (12) having at least one sensor (23) located in the extension of each mobile finger (21) and in contact with it.

7. Device in accordance with any one of the preceding claims, characterised in that it comprises means for acoustic transmission-reception adapted to take measurements following at least two different directions.

## FIG.1

**FIG.2**

**FIG.3**

**FIG.4**